**Europäisches Patentamt**

**European Patent Office**

**Office européen des brevets**

(19)

(11) Veröffentlichungsnummer: **0 268 144**
**B1**

(12) # EUROPÄISCHE PATENTSCHRIFT

(45) Veröffentlichungstag der Patentschrift:
**11.10.89**

(21) Anmeldenummer: **87116208.7**

(22) Anmeldetag: **04.11.87**

(51) Int. Cl.⁴: **B60S 1/48**

(54) Scheibenwaschanlage, insbesondere für Kraftfahrzeuge.

(30) Priorität: **07.11.86 DE 3638074**

(43) Veröffentlichungstag der Anmeldung:
**25.05.88 Patentblatt 88/21**

(45) Bekanntmachung des Hinweises auf die Patenterteilung:
**11.10.89 Patentblatt 89/41**

(84) Benannte Vertragsstaaten:
**ES FR GB IT SE**

(56) Entgegenhaltungen:
**DE-A- 2 434 118**
**DE-A- 2 618 946**
**GB-A- 1 576 098**

(73) Patentinhaber: **SWF Auto-Electric GmbH, Stuttgarter Strasse 119 Postfach 135,
D-7120 Bietigheim-Bissingen(DE)**

(72) Erfinder: **Scholl, Wolfgang, Gartenstrasse 16,
D-7121 Gemmrigheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Zu einer Scheibenwaschanlage in Kraftfahrzeugen gehört üblicherweise ein Waschflüssigkeitsbehälter, aus dem die Waschflüssigkeit mittels einer elektromotorisch betriebenen Pumpe über eine Förderleitung zu wenigstens einer Düse gefördert wird. In den meisten Fällen wird eine Flügelradpumpe verwendet und in die Förderleitung ein Rückschlagventil eingebaut, damit nach dem Abschalten der Pumpe ein Abfließen der Waschflüssigkeit aus der Förderleitung verhindert wird. Auf diese Weise kann man sicherstellen, daß die Zeitspanne zwischen dem Einschalten der Pumpe und dem Austritt der Waschflüssigkeit aus der Düse sehr klein ist, die Waschanlage also eine kurze Ansprechzeit hat.

Nachteilig bei diesen Waschanlagen, bei denen im Interesse einer kurzen Ansprechzeit die Förderleitung nicht entleert wird, ist aber, daß insbesondere in dem Abschnitt nahe der Düse das der Waschflüssigkeit meist zugesetzte Gefrierschutzmittel verdunstet und daher ein Einfrieren der Waschflüssigkeit ohne zusätzliche Maßnahmen nicht zuverlässig verhindert werden kann. Man hat deshalb beheizte Düsen eingesetzt, was jedoch die Herstellungskosten und den Montageaufwand wesentlich erhöht.

Der vorliegenden Erfindung liegt daher die Aufgabe zugrunde, die Betriebssicherheit einer solchen Scheibenwaschanlage mit einfachen Mitteln zu verbessern.

Diese Aufgabe wird erfindungsgemäß mit den kennzeichnenden Merkmalen des Anspruchs 1 gelöst.

Der vorliegenden Erfindung liegt also die Erkenntnis zugrunde, daß gewissermaßen durch eine Umstellung der Betriebsart der Scheibenwaschanlage die Betriebssicherheit verbessert werden kann. Nach der vorliegenden Erfindung ist dazu vorgesehen, daß im Sommer die Waschanlage in der herkömmlichen Weise, also mit nicht entleerter Förderleitung betrieben wird, während im Winter, also bei tiefen Außentemperaturen eine Betriebsart mit entleerter Förderleitung gewählt wird. Damit kann in vielen Fällen ein Einfrieren der Waschflüssigkeit vermieden werden, jedoch ist zu berücksichtigen, daß im Winterbetrieb die Ansprechzeit durch die erfindungsgemäßen Maßnahmen verlängert wird. Die Verlängerung der Ansprechzeit beeinträchtigt jedoch die Verkehrssicherheit nicht in dem Maße wie eine völlig unwirksame Waschanlage.

Die beiden Betriebsarten können in einer einfachsten Ausführungsform über ein willkürlich betätigbares Schaltelement vorgegeben werden, doch wird eine Ausführung bevorzugt, bei der dieses Schaltelement selbsttätig in Abhängigkeit von der Außentemperatur umschaltet und damit die Betriebsart der Waschanlage vorgibt.

Bei einer Waschanlage mit einem Rückschlagventil in der Förderleitung kann man eine Entleerung des Abschnittes der Förderleitung zwischen dem Rückschlagventil und der Düse leicht dadurch gewährleisten, daß man dort eine Abzweigleitung vorsieht, die über ein Ventil geöffnet bzw. bei höherer Temperatur geschlossen wird. Bei einer einfachsten Ausführung könnte dabei Waschflüssigkeit in diesem Abschnitt der Förderleitung über das Ventil einfach ins Freie abfließen. Um diese Waschflüssigkeitsmenge aber nicht zu verlieren, wird gemäß einer besonders bevorzugten Weiterbildung der Erfindung vorgeschlagen, die über das Ventil schaltbare Abzweigleitung wieder in den Abschnitt der Förderleitung zwischen Pumpe und Rückschlagventil zurückzuführen. Es ist also gewissermaßen ein schaltbarer Bypass zum Rückschlagventil geschaffen, der bei tiefen Außentemperaturen eine Verbindung zwischen den Förderleitungsabschnitten vor und hinter dem Rückschlagventil zuläßt, bei hohen Außentemperaturen aber diese Verbindung sperrt.

Es gibt auch Waschanlagen, bei denen ohne ein Rückschlagventil allein aufgrund der speziellen Konstruktion der Pumpe eine Entleerung der Förderleitung verhindert wird. Bei einer solchen Ausführung könnte man zur Lösung des eingangs geschilderten Problems die Drehrichtung der Pumpe im Winterbetrieb ändern und damit Waschflüssigkeit aus der Förderleitung in den Behälter zurücksaugen. Wichtig ist dabei, daß wiederum über ein Schaltelement eine der Betriebsarten vorgegeben wird, wobei dann im Sommerbetrieb in herkömmlicher Weise eine kurze Ansprechzeit der Waschanlage gewährleistet ist.

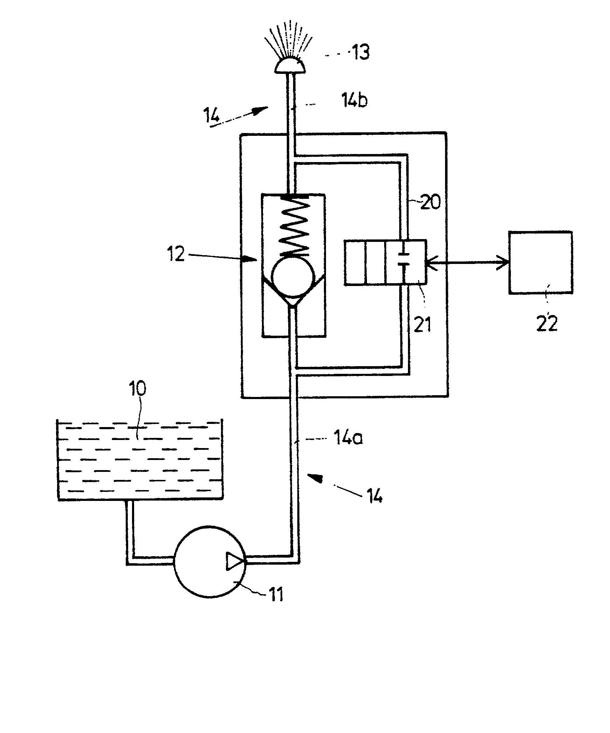

Die Erfindung wird nachstehend anhand des in der Zeichnung schematisch dargestellten Ausführungsbeispieles näher erläutert.

Zu der Waschanlage gehören ein Flüssigkeitsbehälter 10, eine meist elektromotorisch angetriebene Förderpumpe 11, ein Rückschlagventil 12, eine Waschdüse 13 sowie eine Förderleitung 14 mit einem ersten Abschnitt 14a zwischen Pumpe 11 und Rückschlagventil und einem zweiten Abschnitt 14b zwischen Rückschlagventil 12 und Waschdüse 13. Insoweit entspricht die Waschanlage bekannten Ausführungen. Von dem Abschnitt 14b der Förderleitung zwischen dem Rückschlagventil 12 und der Waschdüse 13 geht eine Abzweigleitung 20 ab, die in den anderen Abschnitt 14a der Förderleitung mündet. In dieser Abzweigleitung ist ein schaltbares Ventil 21 angeordnet, das in einer Schaltstellung diese Abzweigleitung öffnet und in der anderen Schaltstellung sperrt. Die Schaltstellung dieses Ventils 21 hängt von der Schaltstellung eines insgesamt mit 22 bezeichneten, schematisch angedeuteten Schaltelementes ab. Im einfachsten Fall könnte es sich dabei um einen willkürlich betätigbaren Handschalter zur Umsteuerung des Ventiles handeln. Es wird jedoch eine Ausführung bevorzugt, bei der dieses Schaltelement 22 temperaturabhängig arbeitet. Dazu könnte beispielsweise ein Bimetallelement oder ein Dehnstoffelement eingesetzt werden, das unmittelbar mechanisch auf das Ventil 21 einwirkt. Denkbar sind natürlich auch Lösungen mit einem elektrischen Temperaturfühler, der über eine Auswerteschaltung ein Magnetventil ansteuert.

In Abhängigkeit von der Schaltstellung dieses Schaltelements 22 und damit des Ventils 21 sind zwei Betriebsarten möglich. Die Anordnung ist dabei so getroffen, daß bei höheren Außentemperaturen oberhalb von beispielsweise +5°C das Ventil 21 die gezeigte Stellung einnimmt, in der die Verbindung zwischen den beiden Abschnitten 14a und 14b der Förderleitung über die Abzweigleitung 20 unterbrochen ist. Bei dieser im Sommer eingestellten Betriebsart ist folglich über das Rückschlagventil 12 eine Entleerung der Förderleitung 14 nach dem Abschalten der Pumpe verhindert. Bei tiefen Außentemperaturen wird über das Ventil aber die Abzweigleitung 20 freigegeben, so daß nach dem Abschalten der Pumpe die Waschflüssigkeit aus dem die Waschdüse 13 angrenzenden Abschnitt 14b über die Abzweigleitung 20 in den Abschnitt 14a und von dort in den Behälter 10 zurückfließen kann. Bei dieser Winterbetriebsart wird also bei dem gezeigten Ausführungsbeispiel die Förderleitung 14 völlig entleert, so daß in diesem Bereich ein Einfrieren der Waschflüssigkeit auch wirksam verhindert ist. Beim nachfolgenden Waschvorgang muß jedoch eine größere Ansprechzeit in Kauf genommen werden.

In der Zeichnung ist lediglich der Kerngedanke der Erfindung dargestellt. Bei der Realisierung des erfindungsgemäßen Vorschlages wird man das die Abzweigleitung 20 schaltende Ventil 21 und das Rückschlagventil 12, ggf. auch das Schaltelement vorzugsweise zu einer Baueinheit zusammenfassen, die dann anstelle des bisherigen Rückschlagventils in bereits im Verkehr befindliche Kraftfahrzeuge eingebaut werden kann. Wenn man ein thermomechanisches Schaltelement verwendet, ist diese Nachrüstung problemlos zu bewältigen, weil keinerlei zusätzliche Kabel verlegt werden müssen. Bei Kraftfahrzeugen die bereits mit einem elektrischen Temperatursensor und einer entsprechenden Auswerteschaltung ausgerüstet sind, wird man vermutlich einer Lösung mit einem elektromagnetisch betätigbaren Ventil in der Abzweigleitung den Vorzug geben. Mit einer solchen leicht nachrüstbaren Baueinheit kann die Betriebssicherheit der Waschanlage kostengünstig verbessert werden. Anstelle mehrerer heizb arer Waschdüsen tritt nämlich nun nur ein einziges schaltbares Ventil, bei dem jedenfalls nicht notwendiger Weise eine Verkabelung erforderlich ist.

## Patentansprüche

1. Scheibenwaschanlage, insbesondere für Kraftfahrzeuge, bei der mittels einer Pumpe (11) Waschflüssigkeit aus einem Behälter (10) über eine Förderleitung (14) zu wenigstens einer Düse (13) förderbar ist, wobei Mittel vorgesehen sind, über die eine Entleerung der Förderleitung bei abgeschalteter Pumpe verhinderbar ist, dadurch gekennzeichnet, daß abhängig von der Schaltstellung eines umstellbaren Schaltelementes (22) wenigstens der unmittelbar an die Waschdüse (13) angrenzende Abschnitt (14b) der Förderleitung (14) entleerbar ist.

2. Scheibenwaschanlage nach Anspruch 1, dadurch gekennzeichnet, daß das Schaltelement (22) temperaturabhängig umstellbar ist und bei tiefen Temperaturen die Förderleitung (14) entleert, die bei hohen Temperaturen aber gefüllt bleibt.

3. Scheibenwaschanlage nach Anspruch 1 oder 2, dadurch gekennzeichnet, daß in die Förderleitung (14) ein Rückschlagventil (12) eingebaut ist und daß von dem Abschnitt (14b) der Förderleitung zwischen Rückschlagventil (12) und Waschdüse (13) eine Abzweigleitung (20) ausgeht, die über ein Ventil (21) steuerbar ist, dessen Schaltstellung von der eines umstellbaren Schaltelementes (22) abhängt.

4. Scheibenwaschanlage nach Anspruch 3, dadurch gekennzeichnet, daß die über das Ventil (21) schaltbare Abzweigleitung (20) in den Abschnitt (14a) der Förderleitung (14) zwischen Förderpumpe (11) und Rückschlagventil (12) mündet.

5. Scheibenwaschanlage nach einem der vorhergehenden Ansprüche, dadurch gekennzeichnet, daß das Schaltelement (22) thermomechanisch arbeitet.

6. Scheibenwaschanlage nach einem der vorhergehenden Ansprüche, dadurch gekennzeichnet, daß das Rückschlagventil (12) und das Ventil (21), vorzugsweise auch das Schaltelement (22) zu einer Baueinheit zusammengefaßt sind.

7. Scheibenwaschanlage nach Anspruch 1 oder 2, dadurch gekennzeichnet, daß in Abhängigkeit von der Schaltstellung des Schaltelementes (22) die Drehrichtung der Förderpumpe (11) ist und in der einen Schaltstellung die Waschflüssigkeit mittels der Pumpe in den Behälter zurückgesaugt wird.

## Claims

1. A windshield washing system, especially for motor vehicles, comprising a pump (11) which can supply washing liquid from a reservoir (10) to at least one jet (13) via a feed pipe (14), whereby means are provided, by which in case of the pump being switched off the feed pipe can be prevented from emptying, characterized in that in dependence of the switching position of a change-over switching element (22) at least the portion (14b) of the feed pipe immediately adjacent to the washing jet (13) can be emptied.

2. A windshield washing system according to claim 1, characterized in that the switching element (22) can be changed over in dependence of the temperature and empties the feed pipe (14) in low temperatures, which feed pipe (14), however, remains full in high temperatures.

3. A windshield washing system according to claim 1 or 2, characterized in that a non-return valve (12) is installed into the feed pipe (14) and that a branch (20) goes off the portion (14b) of the feed pipe between the non-return valve (12) and the washing jet (13), which branch (20) can be controlled via a valve (21), the switching position of which depends on a change-over switching element (22).

4. A windshield washing system according to claim 3, characterized in that the branch (20) switchable via the valve (21) leads to the portion (14a) of the feed pipe (14) between the supply pump (11) and the non-return valve (12).

5. A windshield washing system according to one of the preceding claims, characterized in that the switching element (22) works thermomechanically.

6. A windshield washing system according to one of the preceding claims, characterized in that the non-return valve (12) and the valve (21), preferably the switching element (22), too, are combined in one unit.

7. A windshield washing system according to claim 1 or 2, characterized in that in dependence of the switching position of the switching element (22) the direction of rotation of the supply pump (11) is reversible and that in the one switching position the washing liquid is drawn back into the reservoir by means of the pump.

**Revendications**

1. Lave-glace, notamment pour véhicules automobiles, dans lequel du liquide de lavage peut être entraîné, au moyen d'une pompe (11), depuis un récipient (10) jusqu'à au moins une buse (13), par l'intermédiaire d'une canalisation d'entraînement (14), et dans lequel il et prévu des moyens permettant d'empêcher un vidage de la canalisation d'entraînement, lorsque la pompe est débranchée, caractérisé en ce qu'en fonction de la position de commutation d'un élément de commutation (22), au moins la section (14b), qui jouxte directement la buse de lavage (13), de la canalisation d'entraînement (14) peut être vidée.

2. Lave-glace selon la revendication 1, caractérisé en ce que l'élément de commutation (22) est déplaçable en fonction de la température et provoque, aux basses températures, la vidage de la canalisation d'entraînement (14), qui reste remplie, aux températures élevées.

3. Lave-glace selon la revendication 1 ou 2, caractérisé en ce que le clapet antiretour (12) est monté dans la canalisation d'entraînement (14) et en ce que de la section (14b) de la canalisation d'entraînement située entre le clapet antiretour (12) et la buse de lavage (13) part une canalisation de dérivation (20), qui peut être commandée par l'intermédiaire d'une vanne (21), dont la position de commutation dépend de celle d'un élément de commutation déplaçable (22).

4. Lave-glace selon la revendication 3, caractérisé en ce que la canalisation de dérivation (20), modifiable à l'aide de la vanne (21), débouche dans la section (14a) de la canalisation d'entraînement (14), située entre la pompe d'entraînement (11) et le clapet antiretour (12).

5. Lave-glace selon l'une des revendications précédentes, caractérisé en ce que l'élément de commutation (22) fonctionne d'une manière thermomécanique.

6. Lave-glace selon l'une des revendications précédentes, caractérisé en ce que le clapet antiretour (12), la vanne (21) et de préférence également l'élément de commutation (22) sont rassemblés sous la forme d'un module.

7. Lave-glace selon la revendication 1 ou 2, caractérisé en ce que le sens de rotation de la pompe d'entraînement (11) peut être inversé en fonction de la position de commutation de l'élément de commutation (22) et dans une position de commutation, le liquide de lavage peut être renvoyé par aspiration dans le récipient, à l'aide de la pompe.